# EUROPEAN PATENT APPLICATION

(11) **EP 4 596 650 A1**
(43) Date of publication of application: **06.08.2025**
(21) Application number: 24305200.8
(22) Date of filing: 05.02.2024
(51) Int. Cl.: C09K 3/14

(54) **IMPROVED ABRASIVE PARTICLES**

(71) Applicant: ImerTech SAS, 75015 Paris (FR)
(72) Inventor: POLGE, Florent, Vaulx-Milieu (FR)
(74) Representative: Schöllhammer, Gunther

(57) **Abstract**

The present invention relates to a shaped abrasive particle, comprising opposing and spaced apart first and second major surfaces, the spacing comprising a sidewall, each major surface comprising an inner surface and at least five and at most seven sharp outward protrusions, and where the sidewall comprises multiple intersecting sides which continuously interconnect the opposing surfaces and define the protrusions. The invention further provides abrasive articles containing such particles and a process to produce such articles.

## Description

### FIELD OF THE INVENTION

The present invention provides a shaped abrasive particle. The invention further provides abrasive articles containing such particles and a process to produce such articles.

### BACKGROUND OF THE INVENTION

Abrasive particles typically rely on a difference between the hardness of the abrasive and the material being worked upon, with the abrasive being the harder substance to affect their abrasion. Abrasive particles may be mined (natural abrasive minerals) but they may also be manufactured (synthetic abrasive minerals or synthetic abrasives). Abrasive articles may be coated or bonded. Coated abrasive articles typically comprise the particles mounted on a backing substrate.

These minerals typically have a hardness rated 7 or above on the Mohs scale of hardness and they may be classified or crushed to a specified average particle size ranging from around 1 µm to 2 mm for the particles which are often referred to as grit. These particles typically have rough edges which tend to increase the localized contact pressure with the workpiece.

Common synthetic abrasive materials include garnet, diamond (synthetic), silicon carbide, aluminium oxide, boron nitride, ceramic materials, zirconia alumina, and many others. The grit size is a number used to describe the number of openings per linear inch in a sieve to classify the particle size according to FEPA standards. Low grit numbers are coarser and higher grit numbers are finer.

Factors that influence the rate of abrasion include:
- The difference in hardness between the abrasive and workpiece;
- The size of the particles (grit size); larger particles cut faster and deeper;
- The contact force applied to the process;
- The shape of the particles, and their orientation on the backing substrate.

In the past, different shapes for abrasive particles have been proposed to improve the rate of abrasion. Despite significant efforts, no optimum particle shape has yet been identified which provides an improved rate of abrasion and durability of the abrasive particle during use, combined with an easy way to orientate properly the abrasive particles. During the production of a coated abrasive article, electrostatic strewing of the abrasive particles is typically used. It was observed that the shaped abrasive particles of the past (for example triangular particles) generally do not orientate properly, which is detrimental to the abrasive performance of the produced article. Consequently, additional constraining industrial process steps are required to improve their orientation.

The present invention aims to provide an improved abrasive particle, an improved abrasive article and/or an improved process for the production of an abrasive article.

### GENERAL DESCRIPTION OF THE INVENTION

According to the present invention there is provided an abrasive particle as defined in the accompanying claims as well as the manufacture of the abrasive article comprising such particles and an abrasive article.

Some common abrasive grains are based on polycrystalline alpha alumina, like sol-gel derived abrasive grains, are well known and are established commercially. The grinding performance of this alpha alumina abrasive grain on metal, for example as measured by stock removal rate or g-ratio (quotient of stock removal and abrasive loss), was found to be higher than that obtained by using the previous fused alumina abrasive grain.

Sol-gel abrasive grains are typically prepared by dispersing an alumina monohydrate in acidified water, gelling the dispersion, drying the obtained gel, crushing the dried gel into particles, calcining the dried particles to remove the water and other volatiles, and sintering the calcined particles at a temperature far below the melting point of alumina. Frequently, one or more oxide modifiers, nucleating agents, grain growth inhibitors or other additives are additionally used in order to further improve the properties and the grinding performance of the alumina abrasive grains.

The present invention therefore provides an abrasive particle comprising opposing and spaced apart first and second major surfaces, the spacing comprising a sidewall, wherein each major surface comprises an inner surface and at least five and at most seven sharp outward protrusions, and wherein the sidewall comprises multiple intersecting sides which continuously interconnect the opposing surfaces and define the protrusions.

Abrasive particles are widely used in industrial activities such as cutting, grinding and polishing. In the case of coated abrasive articles, the particles are provided on a support base such as a belt, fiber disc, flap disc, paper backing such as in sandpaper, etc. In the manufacture of such articles the abrasive particles are deposited onto the support base where they are retained by an adhesive layer. These deposited abrasive particles may be coated, the coating being selected according to the use to which the abrasive product is envisaged. One important aspect of the manufacturing process is that the abrasive particles are deposited on the support base in the optimum orientation to optimise their abrasive performance in use.

There is a need of abrasive particles easy to deposit with an optimum orientation on a support base, with good abrasive properties.

We have now found that the abrasive particle of the invention solves this problem.

Preferably, each major surface further comprises a regular polygon with 5 to 7 vertices. Preferably, each protrusion connects two vertices of the regular polygon.

An aspect of the present invention is that the particles of the invention can be readily deposited by electrostatic strewing only (without the need of a further method pre-orientating the particles) on a substrate in a preferred orientation.

By regular polygon is meant a convex regular polygon, equiangular (all angles are equal in measure) and equilateral (all sides have the same length). The regular polygon has 5 to 7 vertices, i.e. is a pentagon, a hexagon or a heptagon.

The first and second surfaces are preferably substantially parallel.

The intersecting sides which define the protrusions may be at an angle from about 10 to 90° in relation to a major surface.

We prefer that the intersecting sides are substantially perpendicular to the first and second major surfaces.

Preferably, the number of intersecting sides is twice the number of protrusions.

Preferably, the intersecting sides may be rectangular, trapezoidal and/or triangular.

The abrasive particle preferably comprises a maximum of 6 protrusions. The abrasive particle may comprise 5 protrusions.

A protrusion is typically formed by two intersecting sides. One or both of the surfaces of the intersecting sides may be concave, convex or planar. Preferably they are planar or concave.

The protrusions are preferably substantially identical (for example, identical size and/or shape). The protrusions are preferably equidistantly positioned around the perimeter of the inner surface, for example a regular polygon.

Preferably, each protrusion connects two vertices of the regular polygon, i.e. each protrusion connects two subsequent vertices. It means that two vertices of the protrusions coincide with two vertices of the polygon.

The term sharp when used in relation to the protrusions is used to require that the cross section of the protrusion decreases as it extends away from the inner surface (for example the regular polygon). It is not required that it reduces to a single point (called opposite point). In this case the protrusion could also be called "pointed". The extent to which the cross section should reduce may depend on the particular use envisaged for the abrasive particle.

Preferably, the sharp protrusions may be pointed. Alternatively, they may not be pointed, for example, they may reduce to two (opposite) points.

The protrusions may be substantially triangular, for example, they may be an equilateral triangle or an isocele triangle.

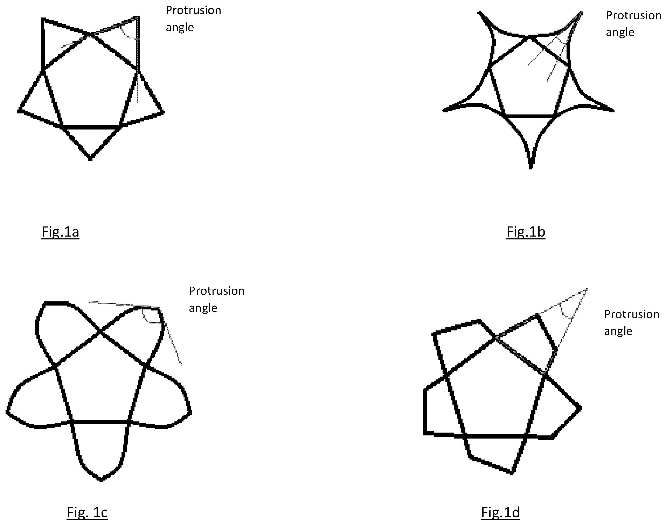

The protrusions may have a protrusion angle from about 10° to about 150°, or from about 36° to about 108°. The protrusion angle is the angle opposite to the inner surface, for example a regular polygon, of a major surface (as shown in Fig. 1a).

In the case the protrusion is pointed, and the opposite point of the protrusion is connected to the vertices of a regular polygon through curved lines, then the protrusion angle is the angle drawn by the two tangents to the curves from the opposite point (as shown in Fig. 1b and 1c).

In the case the protrusion reduces to two points and the inner surface is a regular polygon, then the protrusion angle is the angle formed by the two prolonged lines between the vertices of a regular polygon and the opposite points (as shown in Fig.1d).

The protrusions may be co-planar with the inner surface of a major surface, i.e. part of a same plane. Preferably, all the protrusions may be co-planar with the inner surface of a major surface.

Alternatively, they may be configured at an angle to a major surface and different protrusions may be configured at different angles. For example, they may be configured at an angle from about 5° to about 90° to the inner surface of a major surface. Here again the selected configuration can depend on the particular use envisaged for the abrasive particle.

Preferably each pointed end of the protrusions can be circumscribed by a circle that is centred at the centre of the inner surface, for example the center of the regular polygon (circleₚᵣₒ). In the case the protrusion reduces to two opposite points, then the pointed end circumscribed by a circle is the farthest opposite point from the inner surface, for example from a vertice of the regular polygon.

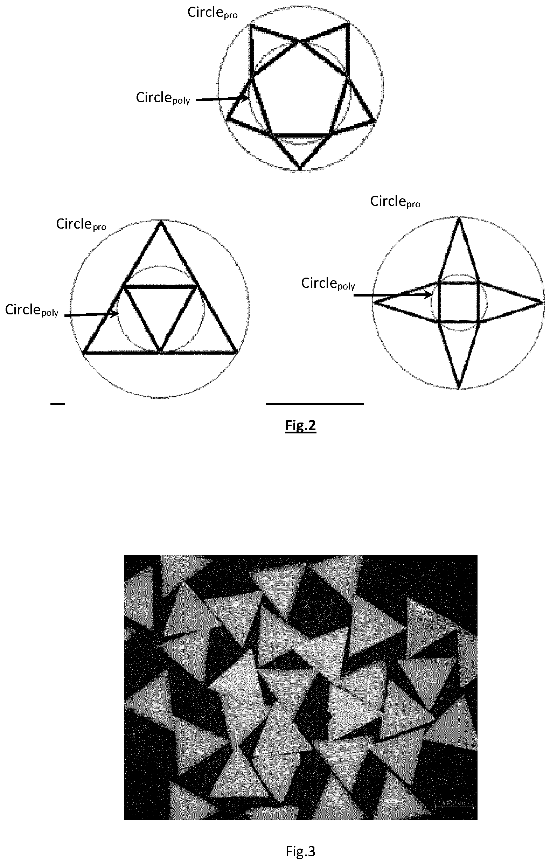

Preferably the inner surface has vertices. The vertices of the inner surface, for example, the regular polygon, can preferably be circumscribed by a circle that is centered at the center of inner surface, for example the center of a regular polygon (circle_{poly}). Figure 2 represents examples of abrasive particles of the invention and particles with a shape not part of the invention with the circleₚᵣₒ and the circle_{poly} drawn.

More preferably the circle circumscribing the pointed ends of the protrusions and the circle circumscribing the pointed ends of the inner surface have the same center, i.e. the center of the inner surface. In this case, the ratio of the diameter of the circle_{poly} over the circleₚᵣₒ is from about 0,10 to about 0,80, preferably from about 0,20 to about 0,70, more preferably from about 0,40 to about 0,70.

In a preferred embodiment the abrasive particles according to the present invention have a chemical composition comprising from about 0.1 % to about 40% by weight zirconia, preferably from about 1 % to about 20% by weight zirconia. In this case the crystal structure comprises a dominant continuous phase of α-alumina crystals and a secondary phase of substantially intergranular oriented zirconia crystals, wherein the average crystal size of the alumina and zirconia crystals is between 100 and 300 nm and wherein the crystal size of the zirconia crystals is less than 100 nm. We have found that an amount of zirconia between 1 % and 10% by weight is sufficient for obtaining high performing abrasive particles for special grinding operations. Thus, in a preferred embodiment of the present invention, the abrasive particles comprise from about 1 to about 10 wt.% zirconia. More preferably, the abrasive particles comprise from about 1 to about 7 wt.%, or from about 1 to about 6 wt.% zirconia.

Preferably, the abrasive particles of the invention comprise from about 50 to about 99.9 wt.% alumina, from about 85 to about 99.7 wt.%, from about 85 to about 98.8 wt.%, or from about 85 to 94 wt.% alumina. The alumina may comprise α-alumina, preferably the alumina comprises from about 75 to about 100 wt.% α-alumina.

Preferably, the chemical composition of the abrasive particles of this invention additionally comprises between 0.1% and 10%, preferably from 0.2 to 1 % by weight MgO, due to the fact that a magnesium nitrate solution is usually added as crystal growth inhibitor and peptizing agent during the sol-gel process.

Preferably, the abrasive particle is a platelet-like particle.

The abrasive particle of this invention comprises a first major surface and a second major surface opposite the first surface whereby both surfaces are separated by a sidewall which preferably has a thickness (T) from about 20 µm to about 500 µm. Preferably, the thickness (T) is from about 50 to about 400 µm.

Another suitable feature for characterizing the abrasive particles is the length-to-thickness ratio which ranges typically from 2 to 10, preferably from 3 to 7. It is to be noted that to calculate this ratio, the length corresponds to the maximum dimension of the two major surfaces, i.e. the highest distance between two points of a major surface (the maximum Feret points), and the thickness corresponds to the maximum thickness of the sidewall.

Also in this case it was found that, in order to be successfully applied to abrasive articles, the abrasive particles should have a certain degree of compactness with a corresponding length-to thickness-ratio.

In addition, the abrasive particles should have a certain degree of isometricity.

The first and second major surfaces may be substantially parallel, i.e. the thickness of the sidewall interconnecting the opposing surfaces is substantially the same, i.e. does not differ from more than 15% of the maximum thickness of the sidewall.

Alternatively, the first and second major surfaces may not be parallel. For example, the two major surfaces might be at angle from about 5° to about 85°, for example from about 10° to about 50°.

Preferably, the first and second major surfaces may be identical.

Preferably, the first and second major surfaces may be superposable, i.e. may be identical in shape and size, and in 2 dimensions they share the same projected center. Alternatively, they may be identical in shape and size, but the first major surface is rotated on its center compared to the second major surface, at a certain twisted angle. For example, the twisted angle may be from about 1° to about 54°. Alternatively, the first major surface may be translated at a certain distance (translation distance) compared to the second major surface. For example, the translation distance may be from about 10 µm to about 500 µm.

The present invention also provides an abrasive article comprising the abrasive particles of the invention.

Preferably, the abrasive article is a coated abrasive article. The coated abrasive article may comprise a backing substrate carrying the abrasive particles of the invention.

The coated abrasive article may further comprise a top coat.

The present invention also provides a process for the production of a coated abrasive article comprising applying abrasive particles of the invention to a backing substrate provided with an adhesive by electrostatic strewing.

### SPECIFIC DESCRIPTION OF THE INVENTION

The present invention concerns shaped abrasive particles, abrasive articles containing these particles and a process for making the article.

Particle sizes and shapes were measured by means of an optical microscope STEMI SV6 (Carl Zeiss GmbH). Particle size and shape are analyzed by means of Imaged software for calculating the respective dimensions and/or angles of each single abrasive particle conveniently deposited and separated when making the picture, based on at least 10 particles.

The preferred method of making the abrasive particles of this invention comprises the steps of:
- preparing a dispersion of alumina hydrate in acidified water comprising α-alumina seeds having a particle size of less than 300 nm;
- gelling the dispersion by addition of aqueous solution of zirconium and magnesium salts, such as zirconium nitrate and magnesium nitrate;
- forming the gel to a layer of homogeneous thickness preferably by molding;
- drying the shaped gel to obtain an abrasive grain precursor material;
- optionally calcining the abrasive grain precursor particles;
- sintering the abrasive grain precursor particles at temperatures below 1450 °C to obtain the abrasive particles.

The preparation of α-alumina seeds maybe carried out by wet ball milling, starting with a fine grained α-alumina powder having a mean particle size of less than 1 µm and optionally centrifuging the ball milled dispersion, to obtain α-alumina seeds having a particle diameter of less than 100 nm. The amount of seeds used for the production of abrasive particles is typically within the range of 1 % and 5% by weight, advantageously about 3% by weight, based on the weight of the abrasive particle product. In one process embodiment of this invention in order to prepare a seeded dispersion of alumina hydrate in acidified water, the centrifuged seed dispersion is added to about 30% by weight aqueous solution of alumina monohydrate whereby the pH of the solution is adjusted to about 2.5 by adding a sufficient amount of nitric acid. The obtained solution is homogenized by using a high shearing homogenizer and subsequently gelled at room temperature by the addition of a salt solution comprising a sufficient amount of zirconium and magnesium salts, such as zirconium nitrate and magnesium nitrate, to obtain abrasive particles having a chemical composition comprising 1 % - 20% by weight zirconia and 1 % - 5% by weight magnesium oxide.

The gel is then cast into shaped moulds and may then optionally be calcined at a temperature between 600 and 700 °C; and is sintered at about 1400 °C in for example a rotary kiln for 5 to 30 minutes.

In general, the resulting abrasive particles have a hardness Hv of more than 20 GPa, preferably more than 22 GPa, and a density of more than 97% of the theoretical density.

The abrasive particles of this invention may be used inter alia in grinding, cutting and polishing applications.

The present invention also provides an abrasive article comprising the abrasive particles of the invention.

Preferably the abrasive article may have a grit density from about 100 to about 1500 g/m².

Preferably, the abrasive article is a coated abrasive article. The coated abrasive article may comprise a backing substrate carrying the abrasive particles of the invention.

Abrasive articles typically comprise abrasive particles secured to the surface of a backing substrate such as a belt, a disc or paper depending upon the use to which the article is to be part.

Three coatings can be used in the manufacture of abrasive articles, an adhesive (called make coat) coating on the backing substrate to fix the abrasive to the substrate. A first size coating (called size coat) on the particles once applied to the substrate to secure the fixing of the abrasive to the substrate, by filling voids between the particles. A top coating (called top coat) is to provide a degree of temperature control during use of the abrasive article.

One method generally employed for the manufacture of coated abrasive articles is electrostatic strewing. In this method, the backing is provided on one of a pair of electrodes, while the particles are provided on the other electrode of the pair. When the electric field is applied a charge differential on the particles will be created to direct the particles onto the backing substrate where they are fixed by an adhesive. The charge density on the particle will be greatest at the sharpest points of the particle and which will therefore be attracted to the backing substrate, having an opposite charge. For example, a triangular particle would preferably orientate by fixing the backing substrate at one sharp point instead of one side of the triangle, as intended. It is desirable that some sharp elements of the particles protrude away from the backing substrate to enable them to enhance the abrasive performance of the obtained abrasive article. We have found that the provision of five to seven protrusions on the particle enables such an orientation of the particles on the substrate and results in good abrasive performance.

A process for the production of a coated abrasive article comprising applying abrasive particles of the invention to a backing substrate provided with an adhesive by electrostatic strewing. For use the particles are deposited on a backing substrate such as, for example, a belt, a grinding disc or paper for producing sand paper and the like. The backing substrate will typically be provided with an adhesive surface to secure the abrasive particles which are typically applied to the surface by electrostatic strewing. A make coat comprising a liquid phenolic resin is a suitable adhesive material for the abrasive particles of this invention. After application of the abrasive particles to the backing substrate a size coat is typically applied following which the material is cured.

If desired a further top coat (also called supersize coating), comprising a phenolic resin and cooling agents may be applied and a final curing may be performed to provide the finished article.

The coated abrasive article may further comprise a top coat.

The conditions for the electrostatic strewing of the abrasive particles should be controlled according to the size and dimensions of the abrasive particles to obtain the desired orientation of the particles on the backing substrate and we have found that the use of the particles of this invention particularly the particles with five protrusions enables an improved orientation of the particles to be achieved.

### DRAWINGS AND EXAMPLES

The invention will now be further clarified by way of example only with reference to the following Examples and Figures in which
Figures 1a to 1d show the protrusion angle of different exemplified particles of the invention;
Figure 2 shows the circleₚᵣₒ and the circle_{poly} on different shaped particles;
Figure 3 shows a comparative shaped abrasive particle with three protrusions;
Figures 4 and 5 show comparative shaped abrasive particles with four protrusions;
Figures 6 and 7 show shaped abrasive particles with five protrusions.

### Example 1

Five abrasive particles, P1 to P5, were prepared using different molds as described below and their properties are summarized in Table 1.

A dispersion with about 30% by weight solids content was made by mixing aluminium oxide monohydrate powder (boehmite) together with 3% by weight alpha aluminium oxide seeds, based on the total weight of the desired product, in a solution containing water and concentrated nitric acid (25%), whereby the pH was adjusted to 2.5. The resulting sol was mixed with 0.5 % by weight equivalent oxide of magnesium nitrate and 2 or 5 % by weight equivalent oxide of zirconium nitrate, each based on the weight of the desired product. Gelling occurred at room temperature after the addition of zirconium nitrate and magnesium nitrate. Then, the various gels were casted into molds of different shapes before drying in a static oven at 100°C for about 10-13 min. Afterwards, the dried particles were recuperated by tapping on the back of the mold. Finally, these ZTA dried grits are sintered in a vertical piston kiln within a crucible at around 1400°C for 2 to 10 min.

The different plastic molds were manufactured by a 3D-printing process, called stereolithography or SLA method, of an UV-curable resin with a relatively good resolution of Z~50 µm and XY-28 µm. The printer is a "Anycubic Photon M3 Premium".

**Table 1**

| | P1 | P2 | P3 | P4 | P5 |
|---|---|---|---|---|---|
| Inner surface | Triangle | Square | Square | Pentagon | Pentagon |
| Number of vertices | 3 | 4 | 4 | 5 | 5 |
| Number of protrusions | 3 | 4 | 4 | 5 | 5 |
| Protrusion angle | 60° | 62° | 37° | 72° | 72° |
| Ratio Dcircle_{poly}/Dcircle ₚᵣₒ | 0.50 | 0.53 | 0.35 | 0.62 | 0.62 |
| Thickness (T) | 250 µm | 275 µm | 290 µm | 280 µm | 260 µm |
| Chemistry (ZTA-type) | 5 wt.% ZrO2 | 5 wt.% ZrO2 | 5 wt.% ZrO2 | 5 wt.% ZrO2 | 2 wt.% ZrO2 |
| | 94.5 wt.% AI203 | 94.5 wt.% AI203 | 94.5 wt.% AI203 | 94.5 wt.% AI203 | 97.5 wt.% AI203 |
| | 0,5 %wt. MgO | 0,5 %wt. MgO | 0,5 %wt. MgO | 0,5 %wt. MgO | 0,5 %wt. MgO |
| Sintered density (g/cm³) | 3.968 | 3.956 | 3.935 | 3.982 | 3.895 |
| Vickers Hardness (GPa) | ∼ 22.0 | ∼ 22.1 | ∼ 21.9 | ∼ 22.1 | ∼ 22.3 |
| Average grain size (nm) | 200 | 175 | 165 | 175 | 155 |

The sintered density was measured by helium pyctometry on a Micromeritics Accupyc II 1330 device.

The Vickers hardness was measured on a LM100 microindentation hardness tester, based on 15 abrasive particles, with a load of 200 g force, for example according to ISO 6507-1-2018. The average grain size was measured on SEM micrographs with a SEM microscope JSM 6610 from JEOL, based on the mean linear intercept method.

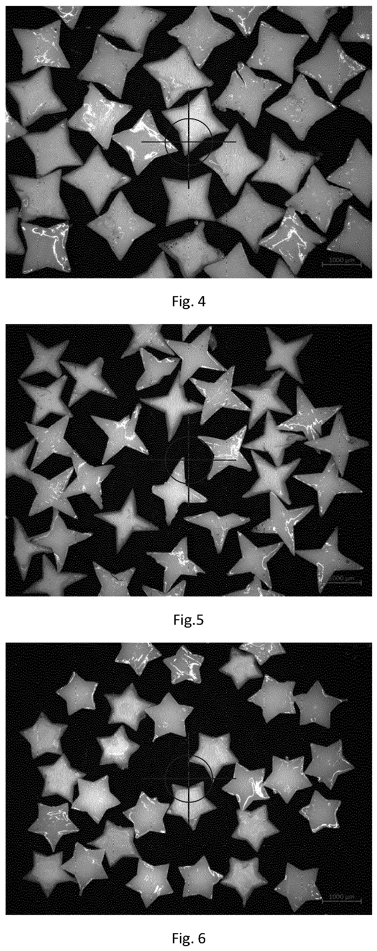

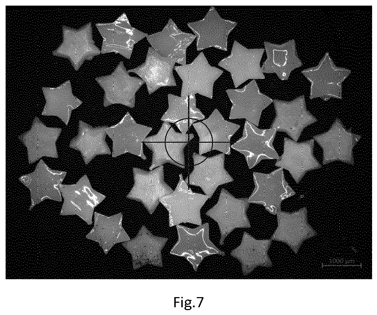

The obtained particles P1, P2, P3, P4, P5 are respectively shown in Figures 3, 4, 5, 6 and 7.

The particles of the invention were found to have a good friability performance when tested in the MKZ ball milling test which is performed at dried conditions (ambient), where 10 g of abrasive particles are poured into an iron cylinder. Twelve heavy tungsten carbide beads of about 20 mm diameter are also placed into the cylinder and will erode and/or break the surface of the abrasive particles during a testing time of 2.5 min. Then, the milled abrasive particles are re-sieved and compared to their original size distribution. Thus, for example, a value of 10 wt% measured below sieve #50 (300 µm) in FEPA standards corresponds to 1g of weighted worn residue versus 10g of original abrasive grits. Similarly, the value measured below sieve #35 (500 µm) corresponds to the weighted worn residue (including the sieved part below 300 µm) versus 10g of original abrasive grits.

The results of the MKZ ball milling test of the five particles P1 to P5 are shown in Table 2.

**Table 2**

| **Shaped abrasives** | **MKZ (Wt%) < 300 µm sieve** | **MKZ (wt %) < 500 µm sieve** |
|---|---|---|
| P1 | 10.1 ± 0.1 | 18.4 ± 0.1 |
| P2 | 10.5 ± 0.1 | 19.7 ± 0.1 |
| P3 | 13.1 ± 0.1 | 25.0 ± 0.1 |
| P4 | 6.5 ± 0.1 | 10.7 ± 0.1 |
| P5 | 8.8 ± 0.1 | 18.5 ± 0.1 |

The particles P4 and P5 of the invention show a much lower friability, which gives a longer life-time to the particles which is particularly beneficial.

### Example 2

Three grinding belts comprising the particles P2, P4, or P5 of example 1 were manufactured as described below.

A backing cloth (i.e. J625-H39) was cut into pieces in order to prepare a belt of 2000 mm length and 50 mm width. The backing cloth was covered with an adhesive (make coat) composed of bakelite (56.6 wt%), calcium carbonate Imercarb (37.7 wt%) and water (5.7 wt%) for dilution. The Bakelite used is a Bakelite resole from Hexion named PF0361SW.

The particles P2, P4 or P5 were normally strewed on the make-coated backing cloth at fixed conditions in the climate room: 20°C, 50% humidity, 50 kV electric-field for 6s holding time with an electro-distance between plates of 2.5 cm. A curing was carried out with a thermal cycle of 6h. A size coat was then applied, comprising the same bakelite (54.5 wt%), calcium carbonate Imercarb (18.2 wt%), cryolite (18.2 wt%) and water (9.1 wt%). Then the curing was carried out with a long thermal cycle of 12h as a standard procedure.

Then a top coat, containing 50 wt% of the cooling agent KBF₄ mixed with 16.7 wt% of liquid Phenol-Formaldehyde resin PF805055A (ex. Prefere resin) and 33.3 wt% of deionized water, is applied on the already-cured size coat with a paint brush. The mass of top coat mix applied is on average about 50 g for 2000 x 50 mm² belt, which approximately corresponds to 500 g/m². The thermal cycle is 5h30, faster than for the two first resin layers.

The following Table 3 summarises all the parameters and grinding performance values measured for each grit belt on 20 mm diameter bars of stainless steel 1.4571 after 12 min cycle at 88N. The total cycle of 12 minutes grinding actually consists of 12 cycles of one minute of grinding, each cycle consisting of 6 times 10 seconds of grinding interrupted by pauses of 20 seconds (for cooling down the metal bar). Thus, after each cycle of one-minute effective grinding, the stock removal of abraded metal is weighted. Thus the total stock removal, which is the sum of the stock removal of the twelve cycles, is finally calculated.

The belt wear is determined at the end of the test, after 10 minutes cooling. The belt is then weighted and compared to its original mass, i.e. before the test.

The grit density corresponds to the mass of abrasive particles strewed on one square meter backing.

**Table 3**

| Example | Grit density (g/m2) | Total stock removal after 12 minutes of grinding (g) | Belt wear (g) |
|---|---|---|---|
| P4 | 700 | 1319 | 5,0 |
| P5 | 700 | 1386 | 7,7 |
| P2 | 700 | 937 | 18,3 |

It was clearly shown that the abrasive particles of the invention removed more metal and has an improved belt wear.

## Claims

1. An abrasive particle comprising
opposing and spaced apart first and second major surfaces, the spacing comprising a sidewall,
wherein each major surface comprises an inner surface and at least five and at most seven sharp outward protrusions, and
wherein the sidewall comprises multiple intersecting sides which continuously interconnect the opposing surfaces and define the protrusions.

2. An abrasive particle according to claim 1, wherein the inner surface is a regular polygon with 5 to 7 vertices,
and each protrusion connects two vertices of the regular polygon.

3. An abrasive particle according to claim 1 or 2, wherein the first and second major surfaces are substantially parallel.

4. An abrasive particle according to any claim 1 to 3, wherein the protrusions are substantially triangular, for example wherein the protrusions are an equilateral triangle or an isocele triangle.

5. An abrasive particle according to any claim 1 to 4, where the protrusion angle is from 10° to 150°.

6. An abrasive particle according to any claim 1 to 5, wherein the intersecting sides are substantially perpendicular to the first and second surfaces.

7. An abrasive particle according to the preceding claims wherein the number of intersecting sides is twice the number of protrusions.

8. An abrasive particle according to the preceding claims wherein the intersecting sides are rectangular, trapezoidal and/or triangular.

9. An abrasive particle according to any of the preceding claims wherein the particle comprises a maximum of 6 protrusions.

10. An abrasive particle according to any of the preceding claims, wherein one or both of the surfaces of two intersecting sides defining a protrusion is/are concave, convex or planar.

11. An abrasive particle according to any of the preceding claims comprising alumina.

12. An abrasive particle according to any of the preceding claims comprising from 0.1% to 40% by weight of zirconia and/or from 0.1% to 10 wt.% magnesia.

13. An abrasive article comprising the abrasive particles of any of claims 1 to 12.

14. An abrasive article according to claim 13, wherein the abrasive article is a coated abrasive article, preferably wherein the coated abrasive article comprises a backing substrate carrying abrasive particles according to any of claims 1 to 12.

15. A coated abrasive article according to claim 14, further comprising a top coat.

16. A process for the production of a coated abrasive article comprising applying abrasive particles according to any of claims 1 to 12 to a backing substrate provided with an adhesive by electrostatic strewing.
